# FASCICULE DE BREVET EUROPEEN

(11) **EP 3 425 267 B1**
(45) Date de publication et mention de la délivrance du brevet: **15.09.2021**
(21) Numéro de dépôt: 18181752.9
(22) Date de dépôt: 04.07.2018
(51) Int. Cl.: F21S 41/43, F21S 41/143, F21S 41/153, F21S 41/265, F21S 41/663, F21S 41/62

(54) **DISPOSITIF D'ECLAIRAGE D'UN VEHICULE AUTOMOBILE**
BELEUCHTUNGSVORRICHTUNG FÜR KRAFTFAHRZEUG
LIGHTING DEVICE FOR A MOTOR VEHICLE

(30) Priorité: 06.07.2017 FR 1756398
(43) Date de publication de la demande: 09.01.2019
(73) Titulaire: Valeo Vision, 93012 Bobigny Cedex (FR)
(72) Inventeur: DOHA, Jean-François, 49000 ANGERS (FR); GIRAUD, Sylvain, 49000 ANGERS (FR); LAMINETTE, Maxime, 49000 ANGERS (FR); GROMFELD, Yves, 49000 ANGERS (FR)
(74) Mandataire: Valeo Visibility

(56) Documents cités:
- EP-A1- 2 501 206
- EP-A2- 2 306 075
- EP-A2- 2 846 077
- DE-A1-102008 044 967
- DE-A1-102014 110 282
- KR-B1- 101 754 169

## Description

L'invention a pour objet un dispositif d'éclairage pour véhicule automobile.

L'invention est particulièrement adaptée à un projecteur d'éclairage en feu de croisement et feu de route pour véhicule automobile.

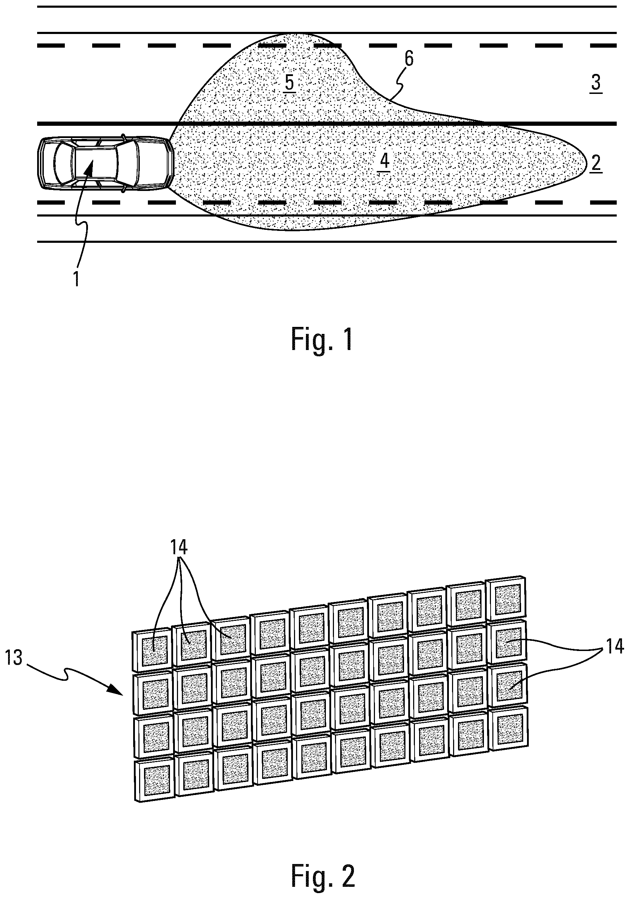

Il est illustré à la figure 1 un véhicule automobile 1 se déplaçant sur une voie de circulation 2 adjacente d'une autre voie 3.

En mode feu de croisement, comme illustré à la figure 1, un faisceau lumineux émis par des projecteurs avant présente une première zone d'éclairage 4 s'étendant au sol de la voie 2 sur laquelle circule le véhicule 1, et une deuxième zone d'éclairage 5 s'étendant au sol de la voie 3.

Il est connu que la deuxième zone d'éclairage 5 présente une coupure 6 de sorte que l'aire de la deuxième zone d'éclairage 5 soit inférieure à l'aire de la première zone d'éclairage 4.

La coupure 6 permet de ne pas éblouir un conducteur d'un véhicule circulant sur la voie 3.

Il est également connu d'asservir la direction du faisceau émis par les projecteurs avant du véhicule automobile à un angle de rotation du volant, ce qui assure que la direction du faisceau suive la géométrie de la voie sur laquelle circule le véhicule, et en particulier la trajectoire du véhicule dans un virage.

Pour ce faire, on recourt généralement à un système mécanique permettant de faire pivoter chaque projecteur avant autour d'un axe vertical.

Par ailleurs, il est de plus en plus répandu dans le domaine automobile, d'utiliser comme source de lumière pour les projecteurs des matrices de diodes électroluminescentes (LED).

Ainsi, il est connu un module d'éclairage pour véhicule automobile, comprenant au moins deux unités d'éclairage, chaque unité d'éclairage comprenant au moins une source de lumière de type émetteur de lumière à semi-conducteur et un moyen de commande de la source de lumière, les moyen de commande des unités d'éclairage étant indépendants les uns des autres, chaque unité d'éclairage comprenant un élément d'illumination configuré pour être éclairé par ladite au moins une source d'éclairage de sorte qu'un faisceau lumineux émis par la source de lumière présente une distribution lumineuse sur un plan dépendant d'une forme de l'élément d'illumination.

Un tel module, du fait de l'utilisation de LED, est avantageux dans la mesure où les LED consomment peu d'énergie, sont d'une durée de vie longue et ne génèrent qu'un moindre échauffement. Les LED permettent également de faire varier les formes des projecteurs et de créer ainsi des signatures lumineuses pour certains modèles de véhicules.

Néanmoins, de telles matrices de LED sont difficilement compatibles avec le système mécanique de pivotement de projecteur.

Le but de la présente invention est de remédier à ces inconvénients.

A cet effet, l'invention a pour objet un dispositif d'éclairage selon la revendication 1.

Ainsi, grâce à la présente invention, il est possible de générer un faisceau lumineux uniforme permis par l'association des trapèzes et des contre-formes de trapèzes.

Il est également possible de réaliser un faisceau lumineux en mode feu de croisement qui suive la géométrie de la route sans avoir à recourir à un système mécanique pivotant.

En effet, lorsque la route est en ligne droite, la coupure du faisceau est par exemple générée par l'un des côtés non parallèles de l'un des trapèzes, appelée première unité d'éclairage, tandis que, lorsque la voie sur laquelle circule le véhicule serpente, en particulier dans un virage, il suffit d'éteindre la première unité d'éclairage et d'allumer uniquement un autre trapèze, appelé deuxième unité d'éclairage, la coupure du faisceau étant alors générée par l'un des côtés non parallèles de la deuxième unité d'éclairage.

Selon une autre caractéristique de l'invention, le dispositif comprend au moins trois sources de lumière et trois éléments d'illumination, le troisième élément d'illumination s'étendant depuis la grande base du premier élément en forme de trapèze dans un sens opposé aux bords du deuxième élément complémentaire du premier élément d'illumination.

Selon une autre caractéristique de l'invention, le dispositif comprend une barrette d'au moins trois éléments d'illumination en forme de trapèze alignés.

Selon une autre caractéristique de l'invention, le dispositif comprend un module de projection à l'infini en sortie de la matrice d'éléments d'illumination.

Selon une autre caractéristique de l'invention, le module de projection à l'infini comprend au moins une lentille.

Selon une autre caractéristique de l'invention, le dispositif comprend deux lentilles et un diaphragme de filtration de rayons lumineux disposé entre les deux lentilles.

L'invention a également pour objet un système d'éclairage pour véhicule automobile comprenant deux dispositifs d'éclairage tels que décrits précédemment.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue de dessus d'un véhicule automobile circulant sur une route en éclairant la route en feu de croisement, comme déjà décrit ;
- la figure 2 illustre une vue en perspective de côté d'une matrice de sources de lumière d'un dispositif d'éclairage selon la présente invention ;
- la figure 3a illustre une vue de devant d'une matrice d'éléments d'illumination associée à la matrice de la figure 2;
- la figure 3b illustre un détail de la figure 3a ;
- la figure 4 illustre une vue en perspective de côté de la matrice d'éléments de mise en forme de la figure 3a;
- la figure 5 illustre une vue en perspective du dispositif d'éclairage selon la présente invention muni d'un module de projection lumineuse ;
- la figure 6 illustre une vue en perspective du module de projection lumineuse de la figure 5 ;
- la figure 7 illustre le dispositif d'éclairage de l'invention selon un mode d'éclairage en feu route;
- la figure 8 illustre deux dispositifs d'éclairage de l'invention selon un premier mode d'éclairage ;
- la figure 9 illustre deux dispositifs d'éclairage de l'invention selon un deuxième mode d'éclairage ;
- la figure 10 illustre deux dispositifs d'éclairage de l'invention selon un troisième mode d'éclairage ; et
- la figure 11 illustre deux dispositifs d'éclairage de l'invention selon un quatrième mode d'éclairage.

### Dispositif d'éclairage

Comme visible sur les figures 2, 3a et 4, le dispositif d'éclairage 10 selon la présente invention comprend une matrice 11 d'éléments d'illumination 12 et une matrice 13 de sources de lumières 14 de type émetteur de lumière à semi-conducteur, par exemple une diode électroluminescente (LED).

Le dispositif d'éclairage 10 comprend également un moyen de commande de chaque source de lumière, non représenté.

Les moyens de commande de chaque LED sont indépendants les uns des autres, de sorte que chaque LED est allumée ou éteinte indépendamment des autres LED de la matrice 13.

Chaque élément d'illumination 12 est associé à l'une des sources de lumière 14 et configuré pour être éclairé par la source LED associée de sorte qu'un faisceau lumineux émis par la source de lumière 14 présente une forme dépendant d'une forme de l'élément d'illumination 12, comme il va être expliqué plus en détail ci-après.

La matrice 11 d'éléments d'illumination 12 comprend au moins un premier élément d'illumination 15 et un deuxième élément d'illumination 16.

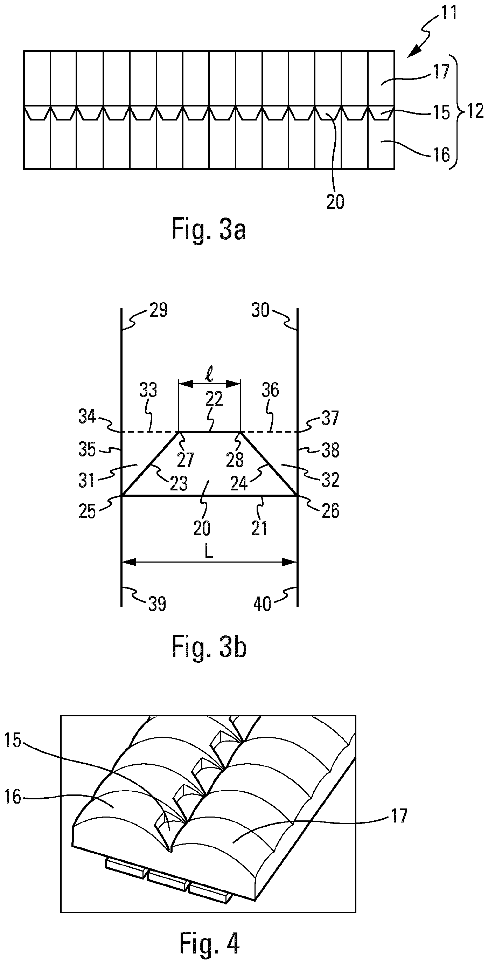

Comme visible sur les figures 3a, 3b et 4, le premier élément d'illumination 15 présente une forme générale de trapèze 20, de préférence isocèle.

Chaque trapèze isocèle 20 est muni de deux côtés opposés parallèles 21, 22, appelés bases, tels que l'une des bases, dite grande base 21, est d'une longueur L plus élevée qu'une longueur I de l'autre base 22, dite petite base.

Chaque trapèze isocèle 20 est également muni de deux côtés 23, 24 non parallèles l'un à l'autre et reliant la grande base 21 et la petite base 22.

Les deux côtés 23 et 24 sont d'une même longueur.

Les côtés 23 présentent une pente ascendante et permettent une coupure de faisceau de feu de croisement pour une conduite à droite, comme il va être détaillé plus loin.

Les côtés 24 présentent une pente descendante et permettent une coupure de faisceau de feu de croisement pour une conduite à gauche, comme il va être détaillé plus loin.

La grande base 21 s'étend entre deux extrémités opposées référencées 25, 26.

La petite base 22 s'étend entre deux extrémités opposées référencées 27 et 28.

L'extrémité 27 de la petite base 22 est disposée en regard de l'extrémité 25 de la grande base 21, tandis que l'extrémité 28 de la petite base 22 est disposée en regard de l'extrémité 26 de la grande base 21.

Le deuxième élément d'illumination 16 est une contre-forme du premier élément d'illumination 15 en forme de trapèze, c'est-à-dire que le deuxième élément d'illumination présente une forme partiellement complémentaire de la forme en trapèze.

Le deuxième élément d'illumination comprend deux bords 29, 30.

Le bord 29 s'étend depuis l'extrémité 25 de la grande base 21 du trapèze 20, tandis que le bord 30 s'étend depuis l'extrémité 26 de la grande base 21.

Les bords 29 et 30 sont sensiblement parallèles l'un à l'autre, en étant distants d'une longueur de l'ordre de la longueur L de la grande base 21.

Le deuxième élément d'illumination 16 comprend deux portions 31, 32 disposées de part et d'autre de la grande base 21 jusqu'à la petite base 22.

La portion 31 présente une aire sensiblement triangulaire comblant un espace délimité par le côté 23, un segment 33 s'étendant depuis l'extrémité 27 du trapèze 20 jusqu'à une projection 34 de l'extrémité 25 sur un axe portant la petite base 22, ainsi qu'un segment 35 s'étendant depuis l'extrémité 25 jusqu'à la projection 34.

De même, la portion 32 présente une aire sensiblement triangulaire comblant un espace délimité par le côté 24, un segment 36 s'étendant depuis l'extrémité 28 du trapèze 20 jusqu'à une projection 37 de l'extrémité 26 sur l'axe portant la petite base 22, ainsi qu'un segment 38 s'étendant depuis l'extrémité 26 jusqu'à la projection 37.

La forme de l'élément d'illumination 16 en contre-forme du trapèze 20 assure une illumination des portions 31 et 32 au cours de l'utilisation du dispositif d'éclairage 10, comme il va être détaillé par la suite.

La matrice (11) d'éléments d'illumination (12) comprend également au moins un troisième élément d'illumination 17.

Le troisième élément d'illumination 17 s'étend depuis la grande base 21 du premier élément 15 en forme de trapèze 20 dans un sens opposé aux bords 29, 30 du deuxième élément 16.

En d'autres termes, le troisième élément d'illumination 17 comprend deux bords 39, 40 sensiblement parallèles l'un à l'autre, le bord 39 se dirigeant dans un prolongement du bord 29 et le bord 40 se dirigeant dans un prolongement du bord 30.

Sur le mode de réalisation illustré, la matrice d'illumination comprend une pluralité de couples d'un premier, deuxième et troisième éléments d'illumination alignés.

Selon l'invention, chaque élément d'illumination est une microlentille.

La microlentille présente des dimensions sensiblement du même ordre de grandeur qu'une LED.

De préférence, la microlentille est une lentille sphérique, dont un foyer est disposé en arrière de la matrice de LED, ce qui permet de générer une image virtuelle agrandie en arrière de la matrice de LED et qui est projetée par un module 50 de projection à l'infini.

Le module de projection à l'infini est disposé en sortie de la matrice d'éléments d'illumination.

Le module de projection comprend au moins une lentille de projection.

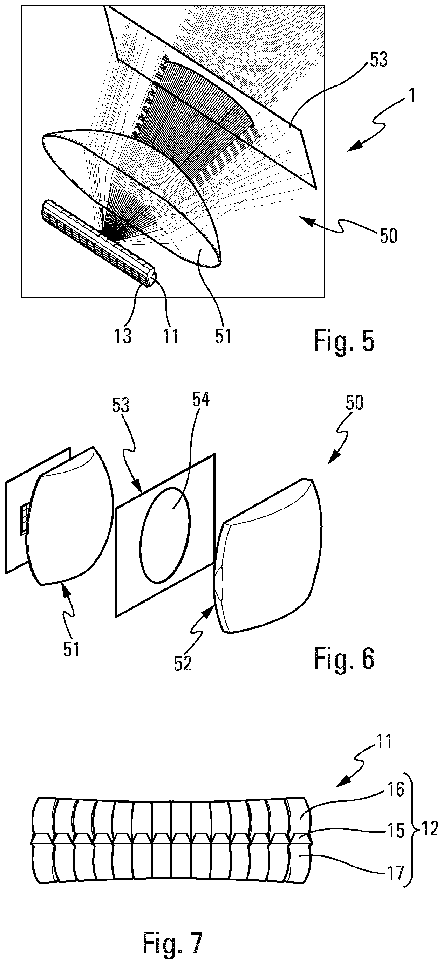

Sur le mode de réalisation illustré à la figure 6, le module de projection 50 comprend une lentille d'entrée 51, une lentille de sortie 52, et un diaphragme 53 de filtration de rayons lumineux disposé entre les deux lentilles 51 et 52.

La lentille d'entrée 51 crée une image virtuelle de l'image de la matrice mise en forme par la matrice d'illumination.

La lentille de sortie 52 est une lentille de projection de l'image virtuelle créée par la lentille d'entrée 51.

Le diaphragme 53 est une paroi opaque muni d'une ouverture centrale 54 pour filtrer des rayons lumineux issus d'une LED et traversant une microlentille non associée à cette LED.

Le diaphragme 53 permet ainsi s'éviter de générer des images fantômes.

### Fonctionnement du dispositif d'éclairage

La figure 7 illustre une vue du dispositif d'éclairage 10 quand toutes les LED sont allumées.

Généralement, ce cas correspond à une utilisation en feu de route du dispositif d'éclairage 10.

Comme visible sur la figure 7, la forme des deuxièmes éléments d'illumination 16 en contre-forme des trapèzes 20 assure un éclairage uniforme par la matrice 11, y compris dans les portions 31 et 32.

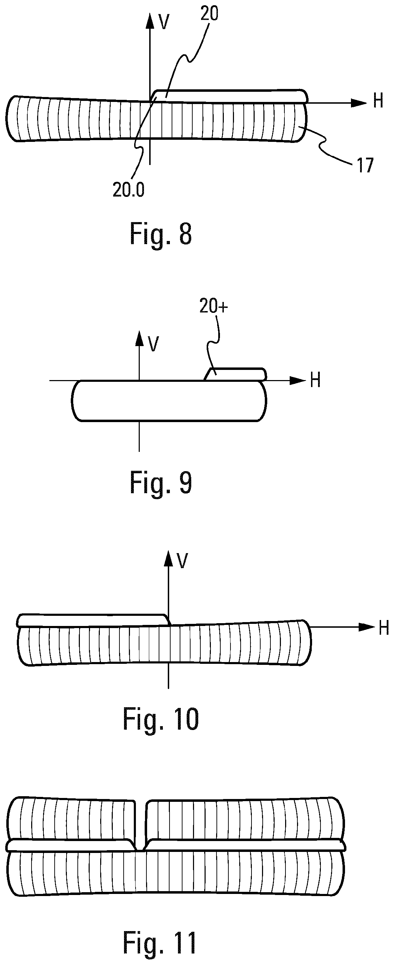

Les figures 8 à 10 illustrent un éclairage émis par un système optique de type projecteur avant pour véhicule automobile comprenant un premier 10 et un deuxième 10' dispositifs d'éclairage identiques juxtaposés.

Les deux dispositifs d'éclairage 10, 10' sont disposés de sorte que soit généré un décalage d'une demi-largeur à mi-hauteur de l'un des trapèzes isocèles 20.

La configuration en décalage assure un doublement de l'intensité lumineuse produite par le projecteur dans les zones où les deux faisceaux émis par les modules d'éclairage 10 et 10' se recouvrent.

La configuration en décalage des deux modules assure également un doublement de résolution du projecteur puisque la coupure de faisceau 6 est successivement constituée par un côté 23 du premier module 10 puis un côté 23' du deuxième module 10'.

Un premier mode de fonctionnement correspond à un cas de fonctionnement en feu de croisement, quand la route est en ligne droite, pour une conduite à droite.

Comme visible sur la figure 8, les trapèzes 20, 20' correspondant à des abscisses positifs des deux dispositifs d'éclairage 10 et 10' sont éclairés, tandis que les trapèzes 20, 20' correspondant à des abscisses négatifs sont éteints.

La coupure 6 du faisceau en feu de croisement est constituée par le côté 23 du trapèze 20-0 correspondant aux plus petites valeurs positives d'abscisses et d'ordonnées.

Les troisièmes éléments 17 sont tous éclairés tandis que les deuxièmes éléments d'illumination 16 sont tous éteints.

Un deuxième mode de fonctionnement correspond à un cas de fonctionnement en feu de croisement, quand la route fait un virage à droite, pour une conduite à droite.

Comme visible sur la figure 9, seule une partie à droite des trapèzes 20 (correspondant à des valeurs strictement positives d'abscisses) tandis que les autres trapèzes sont éteints.

Comme pour la figure 8, les troisièmes éléments 17 sont tous éclairés tandis que les deuxièmes éléments d'illumination 16 sont tous éteints.

La coupure 6 du faisceau en feu de croisement est constituée par le côté 23 du trapèze référencé 20+ sur la figure 9.

Ainsi, dans un virage à droite, le projecteur continue d'éclairer la route sans éblouir un conducteur d'un véhicule circulant en sens opposé.

On note que, avantageusement, le dispositif d'éclairage comprend également des moyens d'asservissement de l'éclairage de la matrice 13 de LED à un capteur d'un paramètre de trajectoire d'un véhicule automobile.

Le capteur est avantageusement un angle de rotation d'un volant du véhicule automobile, le paramètre de trajectoire indiquant une déviation d'une route sur laquelle circule le véhicule relativement à une ligne droite, telle que, en particulier, un virage.

Un troisième mode de fonctionnement correspond à un cas de fonctionnement en feu de croisement, quand la route est en ligne droite, pour une conduite à gauche.

Comme visible sur la figure 10, les trapèzes 20, 20' correspondant à des abscisses négatifs des deux dispositifs d'éclairage 10 et 10' sont éclairés, tandis que les trapèzes 20, 20' correspondant à des abscisses positifs sont éteints.

La coupure 6 du faisceau en feu de croisement est constituée par le côté 24 du trapèze 20-0 correspondant aux plus grandes valeurs négatives d'abscisses et d'ordonnées.

Les troisièmes éléments 17 sont tous éclairés tandis que les deuxièmes éléments d'illumination 16 sont tous éteints.

Un quatrième mode de fonctionnement correspond à un cas de fonctionnement en feu de route.

Comme visible sur la figure 11, toutes les LED sont allumées à l'exception d'un couple de premier élément 15 et deuxième élément 16.

Généralement, ce cas correspond à une utilisation en feu de route des dispositifs d'éclairage 10, 10', quand un véhicule a été détecté en sens opposé au véhicule équipé des dispositifs d'éclairage.

Comme visible sur la figure 11, la forme des deuxièmes éléments d'illumination 16 en contre-forme des trapèzes 20 assure un éclairage uniforme par la matrice 11, y compris dans les portions 31 et 32.

### Avantages

La présente invention présente l'avantage de générer un faisceau lumineux pour feu de croisement dont la coupure suit la trajectoire du véhicule sur une route sinueuse, du fait d'une discrétisation du faisceau en trapèzes isocèles successifs inversés.

La discrétisation selon la présente invention permet également une adaptation à un véhicule pour conduite à droite tout comme à un véhicule pour conduite à gauche, et permet même un changement de conduite droite ou gauche pour un véhicule donné.

La discrétisation en trapèzes permet également une adaptation à un feu de route non éblouissant pour un autre véhicule.

Ainsi, la présente invention permet de réaliser différentes fonctions, telles que feu de croisement directionnel, conduite à gauche et à droite, et feu de route non éblouissant.

Un autre avantage de l'invention réside dans l'éclairage uniforme permis par l'association des trapèzes et des contre-formes de trapèzes, comme déjà indiqué.

## Revendications

1. Dispositif d'éclairage pour véhicule automobile, comprenant une matrice d'au moins deux sources de lumière de type émetteur de lumière à semi-conducteur et une matrice d'au moins un premier (15) et un deuxième (16) éléments d'illumination, chaque élément d'illumination étant une microlentille associée à l'une des sources de lumière et configurée pour être éclairée par ladite source de lumière associée de sorte qu'un faisceau lumineux émis par la source de lumière présente une forme dépendant d'une forme de l'élément d'illumination, **caractérisé en ce que** le premier élément d'illumination (15) présente une face de sortie de la lumière en forme de trapèze muni de deux côtés opposés parallèles (21, 22), appelés bases, tels que l'une des bases, dites grande base (21), est d'une longueur plus élevée qu'une longueur de l'autre base, dite petite base (22), ledit trapèze (20) étant également muni de deux côtés non parallèles (23, 24) l'un à l'autre et reliant la grande base (21) et la petite base (22), et le deuxième élément d'illumination (16) présente une forme partiellement complémentaire de la forme en trapèze, en contre forme du trapèze (20), et comprend deux portions (31, 32) d'aires triangulaires disposées de part et d'autre de la grande base (21) jusqu'à la petite base (22) deux bords (29 , 30) s'étendant depuis deux extrémités opposées de la grande base (21), parallèlement l'un à l'autre, en direction de la petite base (22) en étant distants d'au moins une longueur de l'ordre de la longueur de la grande base (21).

2. Dispositif d'éclairage selon la revendication 1, comprenant au moins trois sources de lumière et trois éléments d'illumination (15, 16, 17), le troisième élément d'illumination (17) s'étendant depuis la grande base (21) du premier élément (15) en forme de trapèze (20) dans un sens opposé aux bords du deuxième élément (16) complémentaire du premier élément d'illumination (15).

3. Dispositif d'éclairage selon l'une des revendications 1 ou 2, comprenant une barrette d'au moins trois éléments d'illumination en forme de trapèze alignés (12).

4. Dispositif d'éclairage selon l'une des revendications précédentes, comprenant un module de projection à l'infini (50) en sortie de la matrice (11) d'éléments d'illumination (12).

5. Dispositif d'éclairage selon la revendication précédente, dans lequel le module de projection à l'infini (50) comprend au moins une lentille.

6. Dispositif d'éclairage selon la revendication précédente, comprenant deux lentilles (51, 52) et un diaphragme (53) de filtration de rayons lumineux disposé entre les deux lentilles (51, 52).

7. Système d'éclairage pour véhicule automobile, comprenant deux dispositifs d'éclairage (10, 10') selon l'une des revendications 1 à 6.

## Patentansprüche

1. Beleuchtungsvorrichtung für ein Kraftfahrzeug, umfassend eine Matrix aus mindestens zwei Lichtquellen vom Typ Halbleiter-Lichtemitter und eine Matrix aus mindestens einem ersten (15) und einem zweiten (16) Beleuchtungselement, wobei jedes Beleuchtungselement eine Mikrolinse ist, die einer der Lichtquellen zugeordnet ist und dazu ausgebildet ist, von der zugehörigen Lichtquelle beleuchtet zu sein, so dass ein Lichtbündel, das von der Lichtquelle emittiert wird, eine Form aufweist, die von einer Form des Beleuchtungselements abhängig ist, **dadurch gekennzeichnet, dass**
das erste Beleuchtungselement (15) eine Lichtaustrittsseite in Form eines Trapezes aufweist, der mit zwei parallelen gegenüberliegenden Seiten (21, 22), den Basen, versehen ist, so dass eine der Basen, die große Basis (21), eine größere Länge als eine Länge der anderen, kleinen Basis (22) aufweist, wobei das Trapez (20) ebenfalls mit zwei Seiten (23, 24) versehen ist, die nicht parallel zueinander sind und die große Basis (21) und die kleine Basis (22) verbinden, und das zweite Beleuchtungselement (16) eine Form aufweist, die die Trapezform in Gegenform des Trapezes (20) teilweise ergänzt, und zwei Abschnitte (31, 32) dreieckiger Flächen umfasst, die beiderseits der großen Basis (21) bis zur kleinen Basis (22) angeordnet sind, wobei sich zwei Kanten (29, 30) von zwei gegenüberliegenden Enden der großen Basis (21) parallel zueinander in Richtung der kleinen Basis (22) erstrecken, wobei sie um mindestens eine Länge in der Größenordnung der Länge der großen Basis (21) beabstandet sind.

2. Beleuchtungsvorrichtung nach Anspruch 1, umfassend mindestens drei Lichtquellen und drei Beleuchtungselemente (15, 16, 17), wobei sich das dritte Beleuchtungselement (17) von der großen Basis (21) des ersten Elements (15) in Form eines Trapezes (20) in einer Richtung erstreckt, die den Kanten des zweiten Elements (16) entgegengesetzt ist, das das erste Beleuchtungselement (15) ergänzt.

3. Beleuchtungsvorrichtung nach einem der Ansprüche 1 oder 2, umfassend eine Leiste aus mindestens drei ausgerichteten trapezförmigen Beleuchtungselementen (12).

4. Beleuchtungsvorrichtung nach einem der vorhergehenden Ansprüche, umfassend ein Modul zur Projektion ins Unendliche (50) am Austritt der Matrix (11) aus Beleuchtungselementen (12).

5. Beleuchtungsvorrichtung nach dem vorhergehenden Anspruch, wobei das Modul zur Projektion ins Unendliche (50) mindestens eine Linse umfasst.

6. Beleuchtungsvorrichtung nach dem vorhergehenden Anspruch, umfassend zwei Linsen (51, 52) und ein Diaphragma (53) zur Filterung von Lichtstrahlen, das zwischen den zwei Linsen (51, 52) angeordnet ist.

7. Beleuchtungssystem für ein Kraftfahrzeug, umfassend zwei Beleuchtungsvorrichtungen (10, 10') nach einem der Ansprüche 1 bis 6.

## Claims

1. Lighting device for a motor vehicle, comprising an array of at least two light sources of the light emitting semiconductor type and an array of at least a first illumination element (15) and a second illumination element (16), each illumination element being a microlens associated with one of the light sources and configured for being lit by the said associated light source in such a way that a light beam emitted by the light source exhibits a shape dependent on a shape of the illumination element, **characterized in that**
the first illumination element (15) has a light exit face of trapezoidal shape having two opposite parallel sides (21, 22), called bases, such that one of the bases, called the large base (21), is longer than a length of the other base, called the small base (22), the said trapezium (20) also having two sides that are not parallel with each other (23, 24) and connecting the large base (21) and the small base (22), and the second illumination element (16) has a shape partially complementary to the trapezoidal shape, in counter-form to the trapezium (20), and comprises two portions (31, 32) of triangular areas arranged on either side of the large base (21) up to the small base (22), two edges (29, 30) extending from two opposite ends of the large base (21), parallel with each other, in the direction of the small base (22), distant by at least a length of the order of the length of the large base (21).

2. Lighting device according to Claim 1, comprising at least three light sources and three illumination elements (15, 16, 17), the third illumination element (17) extending from the large base (21) of the first element (15) of trapezoidal shape (20) in a direction opposite to the edges of the second illumination element (16) complementary to the first illumination element (15).

3. Lighting device according to one of Claims 1 or 2, comprising comprises a bar of at least three aligned illumination elements of trapezoidal shape (12).

4. Lighting device according to one of the preceding claims, comprising a module for projection to infinity (50) at the output of the array (11) of illumination elements (12).

5. Lighting device according to the preceding claim, **characterized in that** the module for projection to infinity (50) comprises at least one lens.

6. Lighting device according to one of the preceding claims, comprising two lenses (51, 52) and a diaphragm (53) for filtering light rays disposed between the two lenses (51, 52).

7. Lighting system for a motor vehicle, comprising two lighting devices (10, 10') according to one of Claims 1 to 6.
